# NEUE EUROPÄISCHE PATENTSCHRIFT

(11) **EP 3 715 969 B2**
(45) Veröffentlichungstag und Bekanntmachung des Hinweises auf die Entscheidung über den Einspruch: **23.09.2026**
(45) Hinweis auf die Patenterteilung: 24.08.2022
(21) Anmeldenummer: 20156859.9
(22) Anmeldetag: 12.02.2020
(51) Int. Cl.: G05B 19/042, G05B 9/02, G05B 19/05, E01C 23/088, E02F 9/20, G05B 9/03, E02F 9/26

(54) **BAUMASCHINE MIT EINER VORRICHTUNG ZUR STEUERUNG DER BAUMASCHINE UND VERFAHREN ZUR STEUERUNG EINER BAUMASCHINE**
CONSTRUCTION MACHINE WITH CONSTRUCTION MACHINE CONTROL APPARATUS AND CONSTRUCTION MACHINE CONTROL METHOD
MACHINE DE CONSTRUCTION DOTÉE D'UN DISPOSITIF DE COMMANDE DE LA MACHINE DE CONSTRUCTION ET PROCÉDÉ DE COMMANDE D'UNE MACHINE DE CONSTRUCTION

(30) Priorität: 26.03.2019 DE 102019107800
(43) Veröffentlichungstag der Anmeldung: 30.09.2020
(73) Patentinhaber: Wirtgen GmbH, 53578 Windhagen (DE)
(72) Erfinder: Vogt, Andreas, 53567 Asbach (DE); Winkels, Sebastian, 51570 Windeck (DE); Berning, Christian, 53909 Zülpich (DE); Liesenfeld, Tim, 56566 Neuwied ST Heimbach-Weis (DE)
(74) Vertreter: Oppermann, Frank

(56) Entgegenhaltungen:
- EP-A1- 2 720 094
- EP-B1- 1 959 056
- DE-A1- 102012 009 000

## Beschreibung

Die Erfindung betrifft eine Baumaschine mit einem Maschinenrahmen, der von einem Fahrwerk getragen wird, und einer Vorrichtung zur Steuerung der Baumaschine. Darüber hinaus betrifft die Erfindung ein Verfahren zur Steuerung einer Baumaschine.

Die bekannten selbstfahrenden Baumaschinen verfügen im Allgemeinen über einen Maschinenrahmen, der von einem Fahrwerk getragen wird, das mindestens zwei Laufwerke aufweist, und mindestens eine am Maschinenrahmen angeordnete Arbeitseinrichtung. Die Laufwerke können Ketten oder Räder oder Bandagen aufweisen. Es sind selbstfahrende Baumaschinen bekannt, die eine Einrichtung zur Bearbeitung des Bodens, beispielsweise zum Abtragen schadhafter Straßenschichten (Straßenfräsmaschine), zur Vorbereitung des Bodens für den Straßenbau oder Wiederaufbereitung bestehender Straßenbeläge (Stabilisierer, Recycler) oder zum Abbau von Bodenschätzen (Surface-Miner) aufweisen. Den einzelnen Laufwerken der Baumaschine können im Allgemeinen Hubeinrichtungen zugeordnet sein, um den Maschinenrahmen zusammen mit der Arbeitseinrichtung gegenüber der Bodenoberfläche absenken und anheben zu können. An beiden Seiten der Fräs- oder Schneidwalze kann ein in der Höhe verstellbarer Kantenschutz vorgesehen sein. Das Walzengehäuse kann an der in Arbeitsrichtung vorderen Seite von einem höhenverstellbaren Niederhalter und an der hinteren Seite von einem höhenverstellbaren Abstreifer verschlossen sein.

Beispiele für Baumaschinen sind auch die bekannten Gleitschalungsfertiger, Straßenfertiger, Walzen, Brecher, Grader, Lader, Kräne etc.

Die bekannten Baumaschinen verfügen über eine Vielzahl von Komponenten, die bestimmte Funktionen ausüben können. Zu diesen Komponenten zählen beispielsweise die Hubeinrichtungen zur Höhenverstellung des Maschinenrahmens, der in der Höhe verstellbare Kantenschutz und der höhenverstellbare Niederhalter oder Abstreifer. Unter Komponenten einer Baumaschine werden aber auch beispielsweise Pumpen oder Scheinwerfer verstanden, die ein- bzw. ausgeschaltet werden können.

Die einzelnen Komponenten der Baumaschine werden von einer Steuer- und Kontrolleinheit gesteuert. Für die Bedienung der Baumaschine sind Bedienelemente vorgesehen, mit denen der Maschinenführer Einfluss auf die einzelnen Komponenten nehmen kann. Die Bedienelemente können mehrere Schaltzustände oder Stellungen einnehmen. Beispielsweise kann der Maschinenführer durch Betätigung der Bedienelemente die Hubeinrichtungen ein- und ausfahren und den Kantenschutz, Niederhalter oder Abstreifer in der Höhe verstellen oder eine Pumpe oder einen Scheinwerfer ein- und ausschalten. Zum Ein- und Ausfahren der Hubeinrichtungen und der Höhenverstellung von Kantenschutz, Niederhalter oder Abstreifer sind im Allgemeinen Kolben-/Zylinder-Anordnungen vorgesehen, die von der Steuer- und Kontrolleinheit angesteuert werden.

Darüber hinaus verfügen die bekannten Baumaschinen über eine mit der Steuerungs- und Kontrolleinheit zusammenwirkende Anzeige- und/oder Signaleinheit, auf der die einzelnen Betriebszustände optisch und/oder akustisch und/oder taktil angezeigt bzw. signalisiert werden können.

Mit einer fortschreitenden Automatisierung steigen die Anforderungen an die Sicherheit der Baumaschine. Ein sicherer Betrieb der Baumaschine setzt die ordnungsgemäße Funktion der unterschiedlichen Komponenten der Baumaschine voraus. Wenn der Maschinenführer auf dem Bedienpult ein Bedienelement betätigt, muss sichergestellt sein, dass die dem Bedienelement zugeordnete Komponente oder die dem Bedienelement zugeordneten Komponenten ordnungsgemäß funktionieren. Für den Fall einer sicherheitsrelevanten Funktionsstörung sollte der Betrieb der Baumaschine unterbrochen werden.

Die WO 2005/003869 A1 beschreibt eine Vorrichtung und ein Verfahren zur automatisierten Steuerung eines Betriebsablaufs einer technischen Anlage. Die Vorrichtung umfasst zwei Steuereinheiten. Die eine Steuereinheit erzeugt Steuerbefehle, die dazu ausgelegt sind, die Anlage zu steuern, und die andere Steuereinheit erzeugt Steuerbefehle, die dazu ausgelegt sind, Sicherheitsfunktionen auszuführen.

Die DE 10 2012 009 000 A1 (EP 2 844 804 B1) beschreibt eine Vorrichtung zum Bedienen einer Baumaschine umfassend ein Bedienfeld mit Bedienungselementen zum Ansteuern von Aktuatoren, um die gewünschten Funktionen der Baumaschine auszuführen, wobei das Bedienfeld auf die Ansteuerung der Aktuatoren bezogene erste Signale erzeugt, die von einer Steuerungs- und Kontrolleinheit in Betätigungssignale umwandelt werden, mit welchen die Aktuatoren betätigt werden und die ersten Signale mit ersten Übertragungsmitteln vom Bedienfeld zur Steuerungs- und Kontrolleinheit übertragen werden. Darüber hinaus verfügt die Vorrichtung über eine Anzeigeeinheit, mit der im Normalbetrieb die momentan von der Baumaschine ausgeführte Funktion visualisierbar ist, wobei die ersten Signale und/oder die Betätigungssignale mit zweiten Übertragungsmitteln an die Anzeigeeinheit übertragen werden. Eine funktionsgerechte Verwendung der Baumaschine auch im Falle einer Störung der ersten Signale oder der ersten Übertragungsmittel wird dadurch ermöglicht, dass mit Hilfe der Anzeigeeinheit auf die Ansteuerung der Aktuatoren bezogene zweite Signale erzeugt werden, die mittels der zweiten Übertragungsmittel an die Steuerungs- und Kontrolleinheit übertragen werden.

Aus der EP 2 720 094 A1 ist ein Sicherheitssystem für sicherheitskritische Anlagen oder Maschinen bekannt, die zur Durchführung einer Sicherheitsabschaltung konzipiert ist. Zur Erhöhung der Sicherheit sind mehrere in Reihe geschaltete Signalübertragungspfade vorgesehen.

Der Erfindung liegt die Aufgabe zugrunde, die Steuerung einer Baumaschine unter Berücksichtigung der jeweiligen Sicherheitsanforderungen zu verbessern.

Die Lösung dieser Aufgabe erfolgt mit den Merkmalen der unabhängigen Ansprüche. Die abhängigen Ansprüche betreffen vorteilhafte Ausführungsformen der Erfindung.

Die Vorrichtung zur Steuerung der erfindungsgemäßen Baumaschine sieht für die Signalübertragung zwischen dem mindestens einen Bedienelement und der Steuerungsund Kontrolleinheit mindestens zwei Signalübertragungstrecken vor. In diesem Sinne sind unter einer ersten und einer zweiten Signalübertragungstrecke nicht zu verstehen, dass die Vorrichtung zur Steuerung der erfindungsgemäßen Baumaschine nur zwei Signalübertragungstrecken aufweist. Unter Signalübertragungstrecken werden sämtliche Mittel zur Übertragung der Signale zwischen Bedienelement und Steuerungs- und Kontrolleinheit verstanden. Die Bedienelemente können mechanische und/oder elektronische Bedienelemente sein, die zwei Schaltzustände, beispielsweise ein Ein/AusSchalter, oder mehrere Schaltzustände, beispielsweise Stufenschalter, oder verschiedene Stellungen, beispielsweise Regler, einnehmen können. Die Bedienelemente des Bedienpults können beispielsweise Kippschalter, Wippschalter, Drehschalter, Potentiometer etc. sein.

Über die erste Signalübertragungsstrecke wird ein den Schaltzustand oder die Stellung des mindestens einen Bedienelements signalisierendes erstes Steuersignals und über die zweite Signalübertragungsstrecke ein den Schaltzustand oder die Stellung des mindestens einen Bedienelements signalisierendes zweites Steuersignals übertragen. Da in einem störungsfreien Betrieb im Normalfall nur ein Signalpfad benötigt wird, wird somit eine Redundanz geschaffen. Dabei ist aber davon auszugehen, dass die Signalübertragung über einen der beiden Signalpfade aufgrund vorhandener Sicherheitsmaßnahmen allein schon hohen Sicherheitsanforderungen genügt. Die Steuersignale können digitale Signale und/oder analoge Signale sein. Zwei Schaltzustände reichen aus, um mit dem Bedienelement eine Komponente der Baumaschine ein- und auszuschalten, beispielsweise eine Pumpe ein- und auszuschalten oder eine Kolben-/Zylinder-Einheit ein- bzw. auszufahren und anzuhalten. Mit der Stellung des Bedienelements kann eine bestimmte Stellung der Komponente, beispielsweise die Hubstellung einer Hubeinrichtung eingestellt werden

Die Steuerungs- und Kontrolleinheit ist derart konfiguriert, dass das über die erste Signalübertragungsstrecke übertragene erste Steuersignal und das über die zweite Signalübertragungsstrecke übertragene zweite Steuersignal auf das Vorliegen eines Plausibilitätskriteriums überprüft werden, wobei die Steuerungs- und Kontrolleinheit die Anzeige- und/oder Signaleinheit zur Ausgabe einer Aufforderung zur Betätigung des Bedienelements veranlasst, wenn die über die erste und zweite Signalübertragungsstrecke übertragenen Steuersignale das Plausibilitätskriterium nicht erfüllen.

Die Aufforderung zur Aktivierung eines Notbetriebs ist für den Maschinenführer zunächst als ein Hinweis auf einen fehlerhaften Zustand zu verstehen. Da die Signalübertragung über einen der beiden Signalpfade aufgrund von geeigneten Sicherheitseinrichtungen allein schon hohen Sicherheitsanforderungen genügen kann, sieht die erfindungsgemäße Steuerung insbesondere bei weniger sicherheitsrelevanten Komponenten einen Notbetrieb vor. Das Grundprinzip der Erfindung liegt darin, dass eine Umschaltung auf den Notbetrieb nicht ohne eine vorherige Funktionskontrolle der betreffenden Komponente durch den Maschinenführer erfolgen kann. Daher veranlasst die Steuerungs- und Kontrolleinheit die Anzeige- und/oder Signaleinheit zur Ausgabe einer Aufforderung zur Aktivierung eines Notbetriebs. Diese Aufforderung an den Maschinenführer kann mit der Ausgabe eines akustischen und/oder optischen und/oder taktilen Signals und/oder der Anzeige einer graphischen Darstellung, beispielsweise eines oder mehrere Symbole oder der Anzeige eines Schriftzuges etc., erfolgen. Die Anzeige- und/oder Signaleinheit kann hierzu unterschiedlich ausgebildet sein.

Die erfindungsgemäße Vorrichtung sieht eine mit der Steuerungs- und Kontrolleinheit zusammenwirkende Eingabeeinheit vor, die derart ausgebildet ist, dass der Maschinenführer oder eine andere Person eine ordnungsgemäße Funktion der betreffenden Komponente bestätigen kann, wobei ein die ordnungsgemäße Funktion der Komponente signalisierendes Kontrollsignal erzeugt wird, das die Steuerungs- und Kontrolleinheit empfängt, oder eine nicht ordnungsgemäße Funktion der Komponente bestätigt werden kann, wobei ein die nicht ordnungsgemäße Funktion der Komponente signalisierendes Kontrollsignal erzeugt wird, das die Steuerungs- und Kontrolleinheit empfängt. Der Maschinenführer oder eine andere Person werden also zur Überprüfung der Funktionsfähigkeit der Komponente der Baumaschine aufgefordert. Wenn diese Komponente nicht funktionsfähig sein sollte, ist ein Notbetrieb nicht möglich.

Die Steuerungs- und Kontrolleinheit ist derart konfiguriert, dass in dem Fall, dass die über die erste und zweite Signalübertragungsstrecke übertragenen Steuersignale das Plausibilitätskriterium nicht erfüllen, die Steuerung in einen Betriebszustand geschaltet wird, in dem die zweite Signalübertragungsstrecke deaktiviert ist, so dass die Steuerung der Komponente der Baumaschine nur in Abhängigkeit von dem über die erste Signalübertragungsstrecke übertragenen ersten Steuersignal erfolgt.

Unter einer Deaktivierung einer Signalübertragungsstrecke werden sämtliche Maßnahmen verstanden, die eine Steuerung der Komponente der Baumaschine ohne die Plausibilitätsprüfung in Abhängigkeit von nur einem Steuersignal erlauben, das über eine der beiden Signalübertragungsstrecken übertragen wird. Die Deaktivierung der Signalübertragungsstrecke kann durch eine Unterbrechung der Übertragungsstrecke oder eine Unterbrechung der Datenübertragung über die Strecke erfolgen. Die Auswertung der betreffenden Signale kann auch unterbrochen werden.

Nach der Deaktivierung der zweiten Signalübertragungsstrecke veranlasst die Steuerungsund Kontrolleinheit die Anzeige- und/oder Signaleinheit zur Ausgabe einer Aufforderung an dem Maschinenführer oder eine andere Person zur Betätigung des Bedienelements, wobei in dem Fall, dass die Steuerungs- und Kontrolleinheit nach der Betätigung des Bedienelements das die ordnungsgemäße Funktion der Komponente signalisierende Kontrollsignal empfängt, d. h. wenn der Maschinenführer oder eine andere Person die ordnungsgemäße Funktionsfähigkeit der Komponente bestätigt hat, die Steuerung in einen Notbetrieb geschaltet wird, in dem die Steuerung der Komponente ohne die Plausibilitätsprüfung nur in Abhängigkeit von dem über die erste Signalübertragungsstrecke übertragenen ersten Steuersignal erfolgt.

In dem Fall, dass die Steuerungs- und Kontrolleinheit nach der Betätigung des Bedienelements das die nicht ordnungsgemäße Funktion der Komponente signalisierende Kontrollsignal empfängt, d. h. wenn der Maschinenführer oder eine andere Person die Funktionsfähigkeit der Komponente nicht bestätigt hat bzw. die nicht ordnungsgemäße Funktion bestätigt hat, wird die Steuerung in einen Betriebszustand geschaltet, in dem die erste Signalübertragungsstrecke deaktiviert ist, so dass die Steuerung der Komponente nur in Abhängigkeit von dem über die zweite Signalübertragungsstrecke übertragenen zweiten Steuersignal erfolgt. Die Steuerungs- und Kontrolleinheit veranlasst die Anzeige- und/oder Signaleinheit nunmehr erneut zur Ausgabe einer Aufforderung zur Betätigung des Bedienelements.

In dem Fall, dass die Steuerungs- und Kontrolleinheit nach der erneuten Betätigung des Bedienelements das die ordnungsgemäße Funktion der Komponente signalisierende Kontrollsignal empfängt, wird die Steuerung in einen Notbetrieb geschaltet, in dem die Steuerung der Komponente ohne eine Plausibilitätsprüfung nur in Abhängigkeit von dem über die zweite Signalübertragungsstrecke übertragenen zweiten Steuersignals erfolgt.

In dem Notbetrieb findet zwar keine Plausibilitätsprüfung mehr statt, die Steuerung der betreffenden Komponente der Baumaschine kann aber mit den sicherheitstechnischen Einrichtungen erfolgen, die mit einer Signalübertragungsstrecke bereitgestellt werden können, aber nur dann, wenn die Funktionsfähigkeit zuvor kontrolliert und bestätigt worden ist, was zumindest bei weniger sicherheitsrelevanten Komponenten ausreichend ist.

Unter einer Steuerung einer Komponente der Baumaschine wird die Betätigung der Komponente, beispielsweise die Höhenverstellung des Abstreifers oder Niederhalters, oder das Ein- bzw. Ausschalten einer Pumpe verstanden. Die Betätigung der Komponente kann mittels eines Aktuators erfolgen, beispielsweise mittels einer Kolben-/Zylindereinheit, die eine Hubeinrichtung betätigt.

Eine bevorzugte Ausführungsform sieht vor, dass in dem Fall, dass die Steuerungs- und Kontrolleinheit in dem Betriebszustand, in dem die erste Signalübertragungsstrecke deaktiviert ist, oder in dem Betriebszustand, in dem die zweite Signalübertragungsstrecke deaktiviert ist, das die nicht ordnungsgemäße Funktion der Komponente signalisierende Kontrollsignal empfängt, die Steuerung nicht in einen Notbetrieb geschaltet wird. In diesem Fall kann der weitere Betrieb der Baumaschine verhindert werden. Es muss aber nicht zwingend der Betrieb der gesamten Baumaschine verhindert werden, sondern es kann auch nur der Betrieb der betreffenden Komponente verhindert werden.

Wenn die Steuerung nicht in einen Notbetrieb geschaltet wird, kann die Steuerungs- und Kontrolleinheit die Anzeige- und/oder Signaleinheit zur Anzeige und/oder Signalisierung einer Störung veranlassen, so dass der Maschinenführer darüber informiert ist, dass ein Notbetrieb nicht möglich ist.

Das Bedienpult mit den Bedienelementen zur Steuerung der Baumaschine und die Eingabeeinheit zur Bestätigung der ordnungsgemäßen Funktion der Baumaschine können räumlich getrennte Einheiten sein oder eine gemeinsame Einrichtung sein. Beispielsweise kann das Bedienpult am Fahrerstand im Umfeld des Maschinenführers und die Eingabeeinheit an der Seite der Baumaschine im Umfeld des Arbeitsbereichs einer anderen Person angeordnet sein. Die Eingabeeinheit sollte sich im Umfeld der Person befinden, in deren Blickfeld sich die Komponente befindet, deren Funktionsfähigkeit zu überprüfen ist.

Die Anzeige- und/oder Signaleinheit und die Eingabeeinheit weisen vorzugsweise einen berührungsempfindlichen Bildschirm (Touch-Screen) mit einer graphischen Benutzeroberfläche auf, um die Bedienung zu erleichtern. Beide Einheiten können über einen gemeinsamen berührungsempfindlichen Bildschirm verfügen. Es können aber auch mechanische Schalter oder Taster und ein konventioneller Bildschirm vorgesehen sein.

Bei einer weiteren bevorzugten Ausführungsform sind die erste und/oder zweite Signalübertragungsstrecke Busleitungen eines Bussystems, das eine Datenübertragung zwischen den einzelnen Komponenten bei einem geringen Aufwand für die Verkabelung erlaubt. Das Bussystem kann ein CAN-Bus sein, der in Bezug auf die hohe Störsicherheit, die geringen Kosten und die Echtzeitfähigkeit Vorteile bietet. Die Signalübertragungsstrecke kann auch nur einen Teil einer Busleitung umfassen.

Bei dem erfindungsgemäßen Verfahren zum Steuern einer Komponente einer Baumaschine wird ein den Schaltzustand oder die Stellung eines Bedienelements signalisierendes erstes Steuersignal über eine erste Signalübertragungsstrecke und ein den Schaltzustand eines Bedienelements signalisierendes zweites Steuersignal über eine zweite Signalübertragungsstrecke übertragen. Das über die erste Signalübertragungsstrecke übertragene erste Steuersignal und das über die zweite Signalübertragungsstrecke übertragene zweite Steuersignal werden auf das Vorliegen eines Plausibilitätskriteriums überprüft, wobei eine Anzeige- und/oder Signaleinheit zur Ausgabe einer Aufforderung zur Aktivierung eines Notbetriebs veranlasst wird, wenn die über die erste und zweite Signalübertragungsstrecke übertragenen Steuersignale das Plausibilitätskriterium nicht erfüllen.

Wenn das Plausibilitätskriterium nicht erfüllt ist, wird die Signalübertragung über die eine oder die andere Signalübertragungsstrecke deaktiviert, wobei die Funktionsfähigkeit der betreffenden Komponente bei einer Signalübertragung über die jeweils aktive Signalübertragungsstrecke ohne die Plausibilitätsprüfung überprüft wird. In den Notbetrieb kann nur nach der Bestätigung der ordnungsgemäßen Funktionsfähigkeit der betreffenden Komponente geschaltet werden, was voraussetzt, dass nur eine der beiden Signalübertragungsstrecken gestört ist.

Im Folgenden werden mehrere Ausführungsbeispiele der Erfindung unter Bezugnahme auf die Figuren im Einzelnen erläutert.

Es zeigen:
- Fig. 1: ein Ausführungsbeispiel einer selbstfahrenden Baumaschine in der Seitenansicht,
- Fig. 2: die Baumaschine von Fig. 1 in der Draufsicht,
- Fig. 3: ein Blockschaltbild mit den für die Erfindung relevanten Komponenten eines ersten Ausführungsbeispiels der Vorrichtung zur Steuerung der Baumaschine,
- Fig. 4: ein Blockschaltbild eines zweiten Ausführungsbeispiels der Vorrichtung zur Steuerung der Baumaschine,
- Fig. 5: ein Blockschaltbild eines dritten Ausführungsbeispiels der Vorrichtung zur Steuerung der Baumaschine, und
- Fig. 6: ein Blockschaltbild eines vierten Ausführungsbeispiels der Vorrichtung zur Steuerung der Baumaschine.

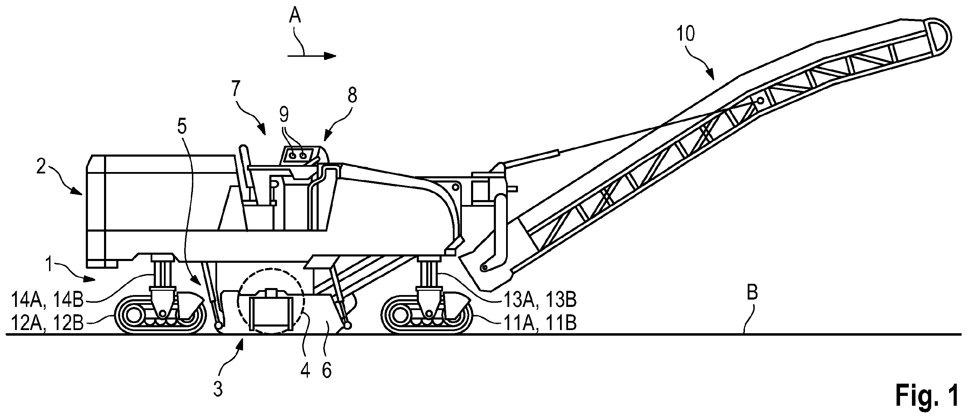

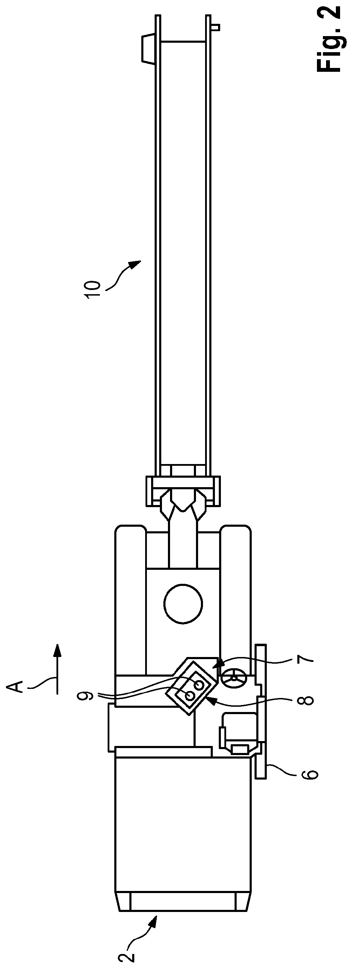

Die Figuren 1 und 2 zeigen in der Seiten- und Draufsicht als Beispiel für eine Baumaschine eine selbstfahrende Straßenfräsmaschine zum Abfräsen von Straßenbelägen, bei der es sich um eine Frontlader-Straßenfräsmaschine handelt. Die Baumaschine verfügt über einen von einem Fahrwerk 1 getragenen Maschinenrahmen 2, an dem eine Arbeitseinrichtung 3 angeordnet ist. Die Arbeitseinrichtung 3 weist eine in Fig. 1 nur andeutungsweise dargestellte Fräswalze 4 auf, die in einem Fräswalzengehäuse 5 angeordnet ist. An der in Arbeitsrichtung A linken und rechten Seite ist das Fräswalzengehäuse 5 von einem Kantenschutz 6 verschlossen. An der in Arbeitsrichtung A vorderen Seite ist das Fräswalzengehäuse 5 von einem Niederhalter und an der hinteren Seite von einem Abstreifer verschlossen, die in Fig. 1 nicht erkennbar sind. Oberhalb des Fräswalzengehäuses 5 befindet sich am Maschinenrahmen der Fahrstand 7 mit einem Bedienpult 8 für den Maschinenführer. Das Bedienpult 8 weist mehrere Bedienelemente 9 auf, die der Maschinenführer betätigen kann. Das abgefräste Material wird mit einer Fördereinrichtung 10 abgeführt, die schwenkbar an der Vorderseite des Maschinenrahmens 2 angeordnet ist.

Die Baumaschine weist in Arbeitsrichtung A ein vorderes linkes Laufwerk 11A und ein vorderes rechtes Laufwerk 11B und ein hinteres linkes Laufwerk 12A und ein hinteres rechtes Laufwerk 12B auf, denen eine in Arbeitsrichtung A vordere, linke und rechte Hubeinrichtung 13 A,B und eine hintere, linke und rechte Hubeinrichtung 14 A,B zugeordnet sind, so dass durch Einfahren bzw. Ausfahren der Hubeinrichtungen die Höhe und Neigung des Maschinenrahmens 2 gegenüber der Bodenoberfläche B verändert werden kann.

Die ein- und ausfahrbaren Hubeinrichtungen 13 A,B und 14 A,B, die schwenkbare Fördereinrichtung 10, der höhenverstellbare Kantenschutz 6, Niederhalter, Abstreifer sind Beispiele für Komponenten der Baumaschine, die von Aktuatoren verstellt werden. Die Aktuatoren können Kolben/Zylinder-Anordnungen sein, mit denen die betreffenden Komponenten betätigt werden.

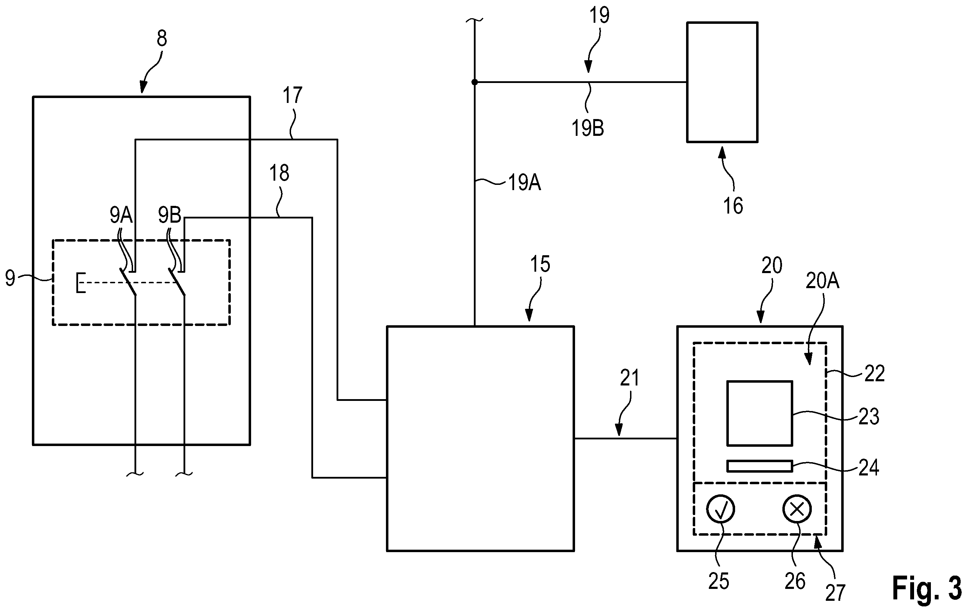

Nachfolgend wird die Vorrichtung zur Steuerung der Baumaschine unter Bezugnahme auf das Blockschaltbild von Fig. 3 beschrieben, das nur die für die Erfindung wesentlichen Komponenten der Vorrichtung zeigt.

Die Vorrichtung zur Steuerung der Baumaschine verfügt über eine Steuerungs- und Kontrolleinheit 15, die eine separate Einheit bilden kann oder Bestandteil einer nicht dargestellten zentralen Rechen- und Steuereinrichtung der Baumaschine sein kann. Die Steuerungs- und Kontrolleinheit 15 kann analoge oder digitale Schaltkreise umfassen. Sie kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen.

Bei dem vorliegenden Ausführungsbeispiel ist die Steuerungs- und Kontrolleinheit 15 eine speicherprogrammierbare Steuerung (SPS), die einen in dem Blockschaltbild nicht dargestellten Eingabe-, Verarbeitungs- und Ausgabeteil umfasst, und die Maschinensteuerung übernimmt. Die Steuerungs- und Kontrolleinheit 15 steuert die Aktuatoren zur Betätigung der einzelnen in Fig. 3 nicht dargestellten Komponenten der Baumaschine an, beispielsweise eine Kolben-/Zylinder-Einheit zum Anheben oder Absenken des Abstreifers. In Fig. 3 ist nur einer der Aktuatoren dargestellt. Die einzelnen Komponenten können von der Steuerungs- und Kontrolleinheit 15 aber auch direkt angesteuert werden, beispielsweise eine Pumpe oder ein Scheinwerfer ein- und ausgeschaltet werden. Die speicherprogrammierbare Steuerung (SPS) kann analoge und/oder digitale Eingänge für digitale bzw. analoge Signale, insbesondere Eingänge für Signale eines Bussystems, beispielsweise eines CAN-Busses haben.

Darüber hinaus weist die Vorrichtung zur Steuerung ein Bedienpult 8 auf, das am Fahrstand 7 angeordnet ist (Figuren 1 und 2). Das Bedienpult 7 weist mehrere Bedienelemente 9 auf, beispielsweise mechanische Schalter oder Taster oder Regler. Bei dem vorliegenden Ausführungsbeispiel ist ein Bedienelement 9 vorgesehen, das der Maschinenführer betätigen kann, um den Abstreifer zu betätigen, beispielsweise den Abstreifer anzuheben. Dieses Bedienelement ist bei dem vorliegenden Ausführungsbeispiel ein mechanischer Taster 9.

Das Bedienelement (Taster) 9 zum Anheben des Abstreifers hat zwei Schaltzustände, d. h. einen Schaltzustand, in dem die dem Abstreifer zugeordnete Kolben/Zylinder-Anordnung nicht betätigt wird, und einen Schaltzustand, in dem die Kolben/Zylinder-Einheit zum Anheben des Abstreifers eingefahren wird. Das Bedienelement (Taster) 9 weist ein erstes Kontaktpaar 9A und ein zweites Kontaktpaar 9B auf, die jeweils einen offenen oder geschlossenen Schaltzustand einnehmen. In dem geschlossenen Schaltzustand wird ein Steuersignal erzeugt, so dass die Kolben-/Zylinder-Einheit eingefahren wird, während dieses Steuersignal in dem offenen Schaltzustand nicht erzeugt wird. Bei dem vorliegenden Ausführungsbeispiel sind beide Taster im Ruhezustand geöffnet. Es kann aber auch ein Taster im Ruhezustand geöffnet und der andere Taster im Ruhezustand geschlossen sein, was bei der Auswertung der Steuersignale zu berücksichtigen ist

Die Übertragung der Steuersignale des ersten und zweiten Kontaktpaars 9A und 9B zu der Steuerungs- und Kontrolleinheit 15 erfolgt unabhängig voneinander über eine erste Signalübertragungsstrecke 17 und eine zweite Signalübertragungsstrecke 18. Die Übertragung des Steuerbefehls von der Steuerungs- und Kontrolleinheit 15 zu dem Aktuator 16, beispielsweise der Kolben-/Zylinder-Einheit des Abstreifers, erfolgt über eine weitere Signalübertragungstrecke 19. Die Kolben-/Zylinder-Einheit kann eine Hydraulikeinheit mit elektrischen Schaltventilen umfassen, welche das Steuersignal empfängt.

Des Weiteren verfügt die Vorrichtung zur Steuerung über eine Anzeige und/oder Signaleinheit 20 und eine Eingabeeinheit 27, die bei dem vorliegenden Ausführungsbeispiel einen berührungsempfindlichen Bildschirm 20A (Touch-Screen) aufweisen. Die Anzeige und/oder Signaleinheit 20 kommuniziert mit der Steuerungs- und Kontrolleinheit 15 über eine weitere Signalübertragungstrecke 21.

Fig. 3 zeigt ein Ausführungsbeispiel, bei dem die Signalübertragungsstrecken 17, 18 elektrische Leitungen sind, die an den digitalen Signaleingängen der Steuerungs- und Kontrolleinheit 15 angeschlossen sind. Die Signalübertragungsstrecke 19 ist eine Busleitung eines Bussystems, das bei dem vorliegenden Ausführungsbeispiel ein CAN-Bus ist, der nach einem bekannten Kommunikationsprotokoll arbeitet, das für die Datenübertragung bereits Sicherheitsfunktionen, beispielsweise die Bildung von Prüfwerten, vorsieht. Die 2-Draht-Busleitung umfasst eine Hauptleitung 19A und eine Stichleitung 19B.

Die Steuerungs- und Kontrolleinheit 15 ist derart konfiguriert, dass die nachfolgenden Verfahrensschritte ausgeführt werden.

Während des Betriebs der Baumaschine empfängt die Steuerungs- und Kontrolleinheit 15 die Steuersignale, die über die erste und zweite Signalübertragungstrecke 17 und 18 übertragen werden. Es wird der Einfachheit halber angenommen, dass ein Steuersignal "High" den geschlossenen Schaltzustand und ein Steuersignal "Low" den offenen Schaltzustand des Bedienelements (Taster) 9 signalisiert, d. h. wenn das Signal "High" anliegt, wird die Kolben-/Zylinder-Einheit des Abstreifers eingefahren.

Die Steuerungs- und Kontrolleinheit 15 führt eine Plausibilitätsprüfung der über die erste und zweite Signalübertragungsstrecke 17 und 18 übertragenen Steuersignale durch. Hierzu können unterschiedliche Plausibilitätskriterien Anwendung finden. Das Plausibilitätskriterium ist, dass die über die erste bzw. zweite Signalübertragungsstrecke 17 und 18 übertragenen Signale gleich sind, beispielsweise beide Signale "High" oder "Low" sind. Ansonsten wird ein fehlerhafter Zustand angenommen.

Wenn das Plausibilitätskriterium nicht erfüllt ist, veranlasst die Steuerungs- und Kontrolleinheit 15 die Anzeige und/oder Signaleinheit 20 einen fehlerhaften Zustand anzuzeigen. Auf dem Touch-Screen 20A erscheint ein Fenster 22, in dem eine graphische Darstellung 23, beispielsweise ein Ausrufezeichen als eine Aufforderung zur Aktivierung eines Notbetriebs, und/oder ein Schriftzug 24 mit einem entsprechenden Hinweis, beispielsweise "Aktivierung Notbetrieb", sichtbar ist.

Wenn ein fehlerhafter Zustand angenommen wird, werden die beiden Signalübertragungsstrecken 17 und 18 von der Steuerungs- und Kontrolleinheit 15 überprüft. Zunächst deaktiviert die Steuerungs- und Kontrolleinheit 15 die erste Signalübertragungsstrecke 17, wobei die zweite Signalübertragungsstrecke 18 aktiviert bleibt. Daraufhin veranlasst die Steuerungs- und Kontrolleinheit 15 die Anzeige und/oder Signaleinheit 20 auf dem Touch-Screen 20A ein Fenster 22 zu öffnen, in dem eine graphische Darstellung 23, beispielsweise eine Darstellung des betreffenden Bedienelements 9 des Bedienpults 8 als eine Aufforderung zur Betätigung des Bedienelements 9, und/oder ein Schriftzug 24 mit einem entsprechenden Hinweis, beispielsweise "Bitte Bedienelement betätigen! (Pfad 1 ist deaktiviert)", sichtbar ist. In dem Fenster erscheinen zwei Schaltflächen 25, 26 (Button), mit denen die ordnungsgemäße (Ja) bzw. nicht ordnungsgemäße Funktion (Nein) der betreffenden Komponente, beispielsweise des Abstreifers, bestätigt werden kann.

Es sei angenommen, dass der Abstreifer nach Betätigung des Bedienelements 9 von der Kolben-/Zylinder-Einheit angehoben wird. Dann berührt der Benutzer die Schaltfläche 25 (Ja) der Eingabeeinheit 27, so dass ein Kontrollsignal erzeugt wird, dass der Steuer- und Kontrolleinheit 15 die ordnungsgemäße Funktion der von dem Aktuator 16 betätigten Komponente signalisiert.

Wenn der Benutzer die Schaltfläche 25 (Ja) berührt, d. h. die Funktionsfähigkeit der betreffenden Komponente bestätigt, so dass die Steuer- und Kontrolleinheit 15 das Kontrollsignal für den ordnungsgemäßen Zustand empfängt, schaltet die Steuerungs- und Kontrolleinheit 15 in den Notbetrieb. Es erscheint eine graphische Darstellung 23 und/oder ein Schriftzug 24, dass der Notbetrieb aktiviert ist, beispielsweise "Notbetrieb aktiviert (Fehler kurzfristig beheben)".

Wenn der Abstreifer nach Betätigung des Bedienelements 9 von der Kolben-/ZylinderEinheit nicht angehoben wird, berührt der Benutzer die Schaltfläche 26 (Nein) der Eingabeeinheit 27, so dass ein Kontrollsignal erzeugt wird, das der Steuer- und Kontrolleinheit 15 die nicht ordnungsgemäße Funktion der Komponente signalisiert. Berührt der Benutzer die Schaltfläche 26 (Nein), d. h. die Funktionsfähigkeit der betreffenden Komponente wird nicht bestätigt, und die Steuerungs- und Kontrolleinheit 15 empfängt das Kontrollsignal für den nicht ordnungsgemäßen Zustand, deaktiviert die Steuerungs- und Kontrolleinheit 15 die zweite Signalübertragungsstrecke 18 und aktiviert die erste Signalübertragungsstrecke 17. Daraufhin veranlasst die Steuerungs- und Kontrolleinheit 15 die Anzeige und/oder Signaleinheit 20 auf dem Touch-Screen 20A wieder ein Fenster 22 zu öffnen, in dem eine graphische Darstellung 23, beispielsweise eine Darstellung des betreffenden Bedienelements 9 des Bedienpults 8 als eine erneute Aufforderung zur Betätigung des Bedienelements 9, und/oder ein Schriftzug 24 mit einem entsprechenden Hinweis, beispielsweise "Bitte Bedienelement betätigen! (Pfad 2 ist deaktiviert)", sichtbar ist. In dem Fenster 22 erscheinen wieder zwei Schaltflächen 25, 26 (Button), mit denen die ordnungsgemäße (Ja) bzw. nicht ordnungsgemäße Funktion (Nein) der betreffenden Komponente, beispielsweise des Abstreifers, bestätigt werden kann.

Wenn der Benutzer nach der Betätigung des Bedienelements 9 die Funktionsfähigkeit der betreffenden Komponente, beispielsweise des Abstreifers, bestätigt, schaltet die Steuerungs- und Kontrolleinheit 15 in den Notbetrieb. Es erscheint eine graphische Darstellung 23 und/oder ein Schriftzug 24, dass der Notbetrieb aktiviert ist, beispielsweise "Notbetrieb aktiviert (Fehler kurzfristig beheben)".

Wenn der Benutzer die Funktionsfähigkeit der betreffenden Komponente, beispielsweise des Abstreifers, aber nicht bestätigen kann und die Schaltfläche 26 (Nein) berührt, schaltet die Steuerungs- und Kontrolleinheit 15 nicht in den Notbetrieb. Auf dem Touch-Screen 20A erscheint ein Fenster 22, in dem eine entsprechende graphische Darstellung 23 und/oder ein entsprechender Schriftzug 24 sichtbar ist, beispielsweise "STÖRUNG (Notbetrieb nicht möglich) Service".

Im Fall einer Störung kann die Steuerungs- und Kontrolleinheit 15 einen Eingriff in die Maschinensteuerung vornehmen, beispielsweise aus Sicherheitsgründen den weiteren Betrieb der Maschine oder nur den Betrieb der betreffenden Komponente stoppen.

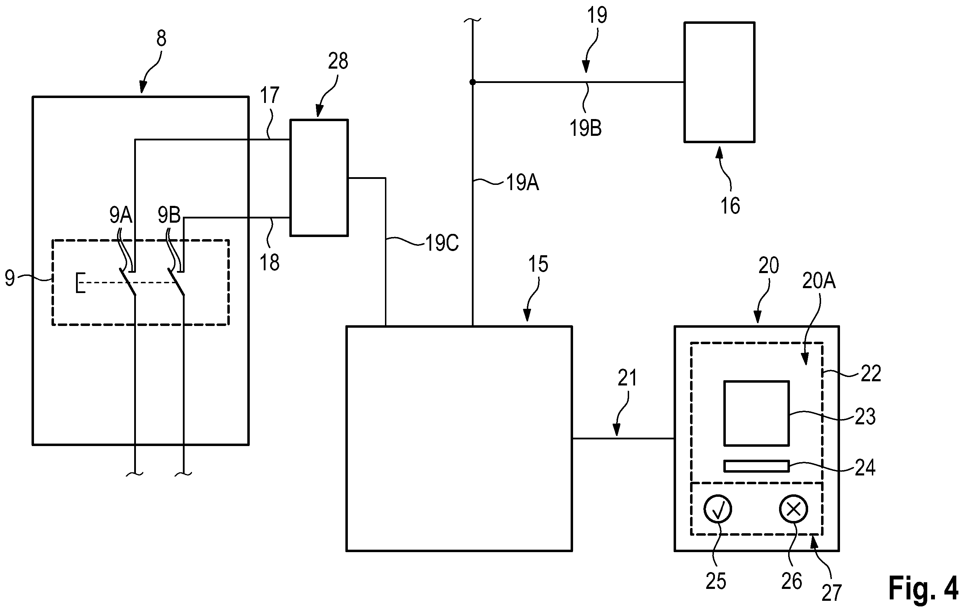

Fig. 4 zeigt ein Ausführungsbeispiel, das sich von der unter Bezugnahme auf Fig. 3 beschriebenen Ausführungsform dadurch unterscheidet, dass ein CAN-Kommunikationsmodul 28 (CAN-Knoten) vorgesehen ist. Die einander entsprechenden Teile sind mit denselben Bezugszeichen versehen. Das CAN-Kommunikationsmodul 28 kann eine Vielzahl von Eingängen haben, von denen nur zwei Eingänge für das Bedienelement 9 dargestellt sind. Die erste und zweite Signalübertragungsstrecke 17, 18 verbinden das erste bzw. zweite Kontaktpaar 9A und 9B mit den Eingängen des CAN-Kommunikationsmodul 28, dass das Steuersignal in ein CAN-Bussignal umwandelt, das die Steuerungs- und Kontrolleinheit 15 (SPS) empfängt. Der Ausgang des CAN-Kommunikationsmoduls 28 ist über eine CAN-Busleitung 19C mit dem CAN-Bus-Eingang der Steuerungs- und Kontrolleinheit 15 (SPS) verbunden. Bei dieser Ausführungsform wird eine Redundanz nur für die Signalübertragung von dem Taster 9 zu dem CAN-Kommunikationsmodul 28 geschaffen.

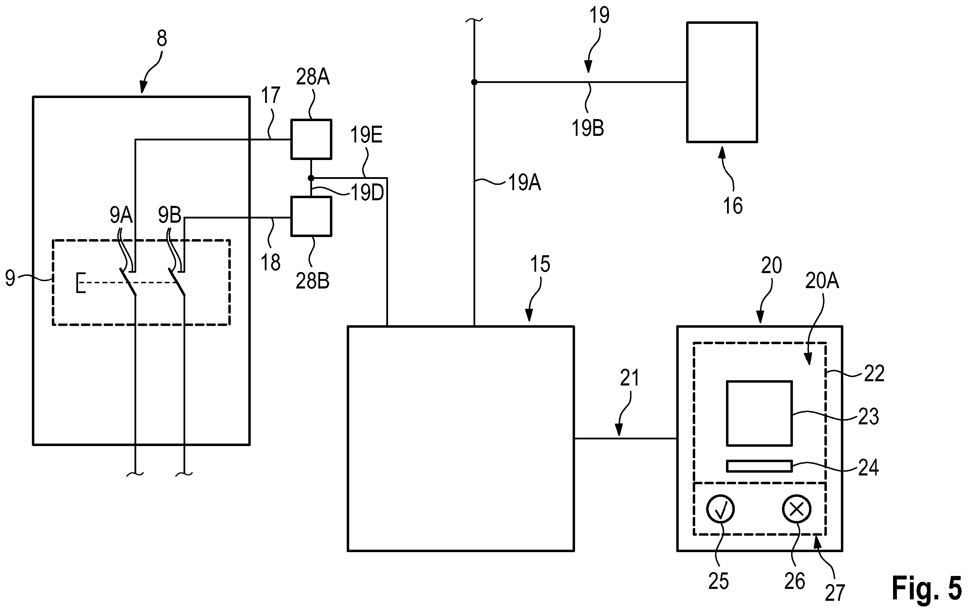

Fig. 5 zeigt ein weiteres Ausführungsbeispiel, das sich von der unter Bezugnahme auf Fig. 4 beschriebenen Ausführungsform dadurch unterscheidet, dass zwei CAN-Kommunikationsmodule 28A und 28B (CAN-Knoten) vorgesehen sind. Die einander entsprechenden Teile sind wieder mit denselben Bezugszeichen versehen. Die erste Signalübertragungsstrecke 17 dient der Signalübertragung von dem ersten Kontaktpaar 9A auf das erste CAN-Kommunikationsmodul 28A und die zweite Signalübertragungsstrecke 18 dient der Signalübertragung von dem zweiten Kontaktpaar 9B auf das zweite CAN-Kommunikationsmodul 28A. Die Ausgänge der beiden CAN-Kommunikationsmodule 28A und 28B sind über eine CAN-Busleitung 19D miteinander verbunden, an der eine weitere CAN-Busleitung 19E angeschlossen ist, die zu dem CAN-Bus-Eingang der Steuerungs- und Kontrolleinheit 15 (SPS) führt. Ein Notbetrieb ist auch dann möglich, wenn einer der beiden CAN-Kommunikationsmodule 28A und 28B ausfällt.

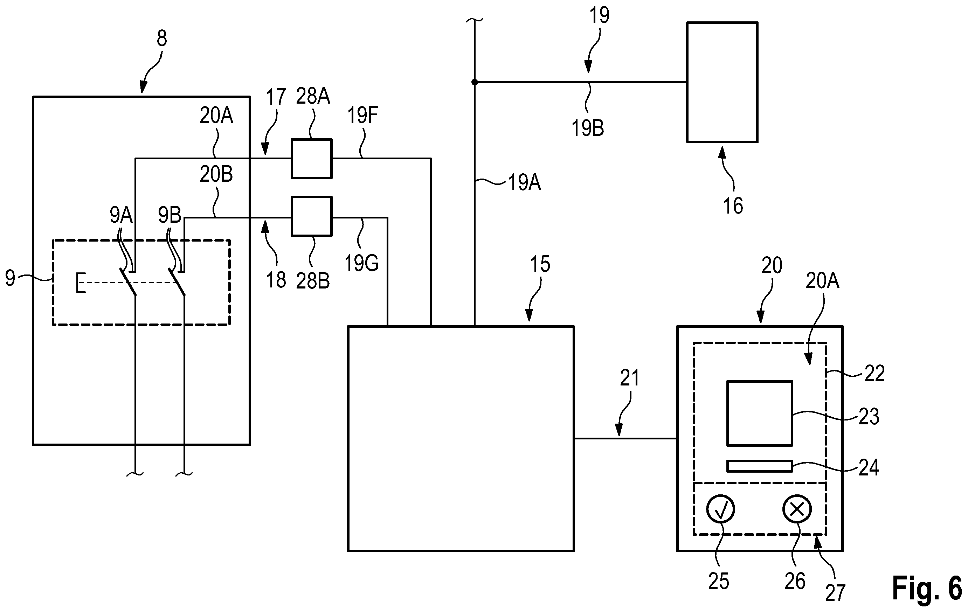

Fig. 6 zeigt ein weiteres Ausführungsbeispiel, das sich von der unter Bezugnahme auf Fig. 5 beschriebenen Ausführungsform dadurch unterscheidet, dass für jedes CAN-Kommunikationsmodul 28A und 28B eine separate CAN-Busleitung vorgesehen ist. Die einander entsprechenden Teile sind wieder mit denselben Bezugszeichen versehen. Die erste Signalübertragungsstrecke 17 umfasst die Signalleitung 20A und die Bus-Leitung 19F des CAN-Busses, während die zweite Signalübertragungsstrecke 18 die Signalleitung 20B und die Bus-Leitung 19G des CAN-Busses umfasst. Bei dieser Ausführungsform wird eine Redundanz für die Signalübertragung von dem Taster 9 zu der Steuerungs- und Kontrolleinheit 15 (SPS) geschaffen. Ein Notbetrieb ist auch dann möglich, wenn einer der beiden CAN-Busleitungen 19F und 19G ausfällt.

## Patentansprüche

1. Baumaschine mit einem Maschinenrahmen (2), der von einem Fahrwerk (1) getragen wird, und einer Vorrichtung zur Steuerung der Baumaschine, wobei die Vorrichtung zur Steuerung der Baumaschine aufweist:
ein Bedienpult (8), das mindestens ein Bedienelement (9) aufweist, das mehrere Schaltzustände oder Stellungen einnehmen kann,
eine Steuerungs- und Kontrolleinheit (15) zur Steuerung einer Komponente der Baumaschine in Abhängigkeit von einem dem Schaltzustand oder die Stellung des mindestens einen Bedienelements (9) signalisierenden Steuersignals,
eine mit der Steuerungs- und Kontrolleinheit (15) zusammenwirkende Anzeige- und/oder Signaleinheit (20),
**dadurch gekennzeichnet, dass**
zwischen dem mindestens einen Bedienelement (9) und der Steuerungs- und Kontrolleinheit (15) eine erste Signalübertragungsstrecke (17) zur Signalübertragung eines den Schaltzustand oder die Stellung des mindestens einen Bedienelements signalisierenden ersten Steuersignals und eine zweite Signalübertragungsstrecke (18) zur Signalübertragung eines den Schaltzustand oder die Stellung des mindestens einen Bedienelements signalisierenden zweiten Steuersignals vorgesehen sind,
die Steuerungs- und Kontrolleinheit (15) derart konfiguriert ist, dass das über die erste Signalübertragungsstrecke (17) übertragene erste Steuersignal und das über die zweite Signalübertragungsstrecke (18) übertragene zweite Steuersignal auf das Vorliegen eines Plausibilitätskriteriums überprüft wird, wobei das Plausibilitätskriterium ist, dass die über die erste bzw. zweite Signalübertragungsstrecke (17, 18) übertragenen Signale gleich sind, wobei die Steuerungs- und Kontrolleinheit (15) die Anzeige- und/oder Signaleinheit (20) zur Ausgabe einer Aufforderung zur Aktivierung eines Notbetriebs veranlasst, wenn die über die erste und zweite Signalübertragungsstrecke übertragenen Steuersignale das Plausibilitätskriterium nicht erfüllen, wobei im Notbetrieb die Steuerung der Komponente ohne Plausibilitätsprüfung nur in Abhängigkeit von dem über die erste Signalübertragungsstrecke übertragenen ersten Steuersignal oder von dem über die zweite Signalübertragungsstrecke übertragenen zweiten Steuersignal erfolgt, und
eine mit der Steuerungs- und Kontrolleinheit (15) zusammenwirkende Eingabeeinheit (27) vorgesehen ist, die derart ausgebildet ist, dass eine ordnungsgemäße Funktion einer Komponente der Baumaschine bestätigt werden kann, wobei ein die ordnungsgemäße Funktion der Komponente signalisierendes Kontrollsignal erzeugt wird, das die Steuerungs- und Kontrolleinheit empfängt, oder eine nicht ordnungsgemäße Funktion der Komponente bestätigt werden kann, wobei ein die nicht ordnungsgemäße Funktion der Komponente signalisierendes Kontrollsignal erzeugt wird, das die Steuerungs- und Kontrolleinheit empfängt,
die Steuerungs- und Kontrolleinheit (15) derart konfiguriert ist, dass in dem Fall, dass die über die erste und zweite Signalübertragungsstrecke (17, 18) übertragenen Steuersignale das Plausibilitätskriterium nicht erfüllen,
die Steuerung in einen Betriebszustand geschaltet wird, in dem die zweite Signalübertragungsstrecke (18) deaktiviert ist, so dass die Steuerung der Komponente nur in Abhängigkeit von dem über die erste Signalübertragungsstrecke (17) übertragenen ersten Steuersignal erfolgt, und die Steuerungs- und Kontrolleinheit (15) die Anzeige- und/oder Signaleinheit (20) zur Ausgabe einer Aufforderung zur Betätigung des Bedienelements (9) veranlasst,
wobei
in dem Fall, dass die Steuerungs- und Kontrolleinheit (15) nach der Betätigung des Bedienelements (9) das die ordnungsgemäße Funktion der Komponente signalisierende Kontrollsignal empfängt, die Steuerung in den Notbetrieb geschaltet wird, in dem die Steuerung der Komponente nur in Abhängigkeit von dem über die erste Signalübertragungsstrecke (17) übertragenen ersten Steuersignals erfolgt, und
in dem Fall, dass die Steuerungs- und Kontrolleinheit (15) nach der Betätigung des Bedienelements (9) das die nicht ordnungsgemäße Funktion der Komponente signalisierende Kontrollsignal empfängt, die Steuerung in einen Betriebszustand geschaltet wird, in dem die erste Signalübertragungsstrecke (17) deaktiviert ist, so dass die Steuerung der Komponente nur in Abhängigkeit von dem über die zweite Signalübertragungsstrecke (18) übertragenen zweiten Steuersignals erfolgt, und die Steuerungs- und Kontrolleinheit (15) die Anzeige- und/oder Signaleinheit (20) erneut zur Ausgabe einer Aufforderung zur Betätigung des Bedienelements (9) veranlasst, und
in dem Fall, dass die Steuerungs- und Kontrolleinheit (15) nach der erneuten Betätigung des Bedienelements (9) das die ordnungsgemäße Funktion signalisierende Kontrollsignal empfängt, die Steuerung in den Notbetrieb geschaltet wird, in dem die Steuerung der Komponente nur in Abhängigkeit von dem über die zweite Signalübertragungsstrecke (18) übertragenen zweiten Steuersignal erfolgt.

2. Baumaschine nach Anspruch 1, **dadurch gekennzeichnet, dass** die Steuerungs- und Kontrolleinheit (15) derart ausgebildet ist, dass in dem Fall, dass die Steuerungsund Kontrolleinheit (15) in dem Betriebszustand, in dem die erste Signalübertragungsstrecke (17) deaktiviert ist, oder in dem Betriebszustand, in dem die zweite Signalübertragungsstrecke (18) deaktiviert ist, das die nicht ordnungsgemäße Funktion der Komponente signalisierende Kontrollsignal empfängt, die Steuerung nicht in den Notbetrieb geschaltet wird.

3. Baumaschine nach Anspruch 2, **dadurch gekennzeichnet, dass** die Steuerungs- und Kontrolleinheit (15) die Anzeige- und/oder Signaleinheit (20) zur Anzeige und/oder Signalisierung einer Störung veranlasst, wenn die Steuerung nicht in den Notbetrieb geschaltet wird.

4. Baumaschine nach einem der Ansprüche 1 bis 3, **dadurch gekennzeichnet, dass** das Bedienelement (9) des Bedienpults (8) ein Schalter oder Taster ist, der ein erstes Kontaktpaar (9A) und ein zweites Kontaktpaar (9B) aufweist, die jeweils einen offenen oder geschlossenen Schaltzustand einnehmen, wobei das erste Kontaktpaar (9A) in die erste Signalübertragungsstrecke (17) und das zweite Kontaktpaar (9B) in die zweite Signalübertragungsstrecke (18) geschaltet ist.

5. Baumaschine nach einem der Ansprüche 1 bis 4, **dadurch gekennzeichnet, dass** die erste und/oder zweite Signalübertragungsstrecke (17, 18) Busleitungen eines Bussystems, insbesondere eines CAN-Bus, sind.

6. Baumaschine nach einem der Ansprüche 1 bis 5, **dadurch gekennzeichnet, dass** die Anzeige- und/oder Signaleinheit (20) und/oder die Eingabeeinheit (27) einen berührungsempfindlichen Bildschirm (20A) mit einer graphischen Benutzeroberfläche aufweisen.

7. Baumaschine nach Anspruch 6, **dadurch gekennzeichnet, dass** die Baumaschine Aktuatoren zur Betätigung einer Komponente der Baumaschine aufweist.

8. Baumaschine nach Anspruch 7, **dadurch gekennzeichnet, dass** der Aktuator eine Kolben-/Zylinderanordnung ist.

9. Verfahren zur Steuerung einer Baumaschine, **dadurch gekennzeichnet, dass**
ein den Schaltzustand oder die Stellung eines Bedienelements (9) signalisierendes erstes Steuersignal über eine erste Signalübertragungsstrecke (17) und ein den Schaltzustand oder die Stellung eines Bedienelements (9) signalisierendes zweites Steuersignal über eine zweite Signalübertragungsstrecke (18) übertragen wird, und das über die erste Signalübertragungsstrecke (17) übertragene erste Steuersignal und das über die zweite Signalübertragungsstrecke (18) übertragene zweite Steuersignal auf das Vorliegen eines Plausibilitätskriteriums überprüft werden, wobei das Plausibilitätskriterium ist, dass die über die erste bzw. zweite Signalübertragungsstrecke (17, 18) übertragenen Signale gleich sind, wobei eine Anzeige- und/oder Signaleinheit (20) zur Ausgabe einer Aufforderung zur Aktivierung eines Notbetriebs veranlasst wird, wenn die über die erste und zweite Signalübertragungsstrecke (17, 18) übertragenen Steuersignale das Plausibilitätskriterium nicht erfüllen, wobei im Notbetrieb die Steuerung der Komponente ohne Plausibilitätsprüfung nur in Abhängigkeit von dem über die erste Signalübertragungsstrecke übertragenen ersten Steuersignal oder von dem über die zweite Signalübertragungsstrecke übertragenen zweiten Steuersignal erfolgt, und
dass in dem Fall, dass das Plausibilitätskriterium nicht erfüllt ist,
die Signalübertragung über die zweite Signalübertragungsstrecke (18) deaktiviert wird und die Steuerung einer Komponente der Baumaschine nur in Abhängigkeit von dem das den Schaltzustand oder die Stellung des Bedienelements (9) signalisierenden ersten Steuersignal erfolgt, und die Anzeige- und/oder Signaleinheit (20) zur Ausgabe einer Aufforderung zur Bestätigung einer ordnungsgemäßen Funktion oder einer nicht ordnungsgemäßen Funktion der Komponente der Baumaschine mit einer Eingabeeinheit (27) veranlasst wird,
wobei
in dem Fall, dass mit der Eingabeeinheit (27) eine ordnungsgemäße Funktion der Komponente der Baumaschine bestätigt wird, die Steuerung in den Notbetrieb geschaltet wird, in dem die Steuerung der Komponente nur in Abhängigkeit von dem über die erste Signalübertragungsstrecke (17) übertragenen ersten Steuersignal erfolgt, und
in dem Fall, dass mit der Eingabeeinheit (27) eine nicht ordnungsgemäße Funktion der Komponente der Baumaschine bestätigt wird, die Steuerung in einen Betriebszustand geschaltet wird, in dem die erste Signalübertragungsstrecke (17) deaktiviert wird und die Steuerung der Komponente nur über das den Schaltzustand oder die Stellung des Bedienelements signalisierenden zweiten Steuersignal erfolgt, und die Anzeige- und/oder Signaleinheit (20) erneut zur Ausgabe einer Aufforderung zur Bestätigung einer ordnungsgemäßen Funktion oder einer nicht ordnungsgemäßen Funktion veranlasst wird,
und in dem Fall, dass mit der Eingabeeinheit (27) eine ordnungsgemäße Funktion der Komponente bestätigt wird, die Steuerung in den Notbetrieb geschaltet wird, in dem die Steuerung der Komponente nur in Abhängigkeit von dem über die zweite Signalübertragungsstrecke (18) übertragenen zweiten Steuersignal erfolgt.

10. Verfahren nach Anspruch 9, **dadurch gekennzeichnet, dass** die Anzeige- und/oder Signaleinheit (20) zur Anzeige und/oder Signalisierung einer Störung veranlasst wird, wenn in dem Betriebszustand, in dem die erste Signalübertragungsstrecke (17) deaktiviert ist, oder in dem Betriebszustand, in dem die zweite Signalübertragungsstrecke (18) deaktiviert ist, mit der Eingabeeinheit (27) eine nicht ordnungsgemäße Funktion der Komponente bestätigt wird.

11. Verfahren nach einem der Ansprüche 9 oder 10, **dadurch gekennzeichnet, dass** als Bedienelement (9) des Bedienpults (8) ein Schalter oder Taster vorgesehen wird, der ein erstes Kontaktpaar (9A) und ein zweites Kontaktpaar (9B) aufweist, die jeweils einen offenen oder geschlossenen Schaltzustand einnehmen, wobei das erste Kontaktpaar (9A) in die erste Signalübertragungsstrecke (17) und das zweite Kontaktpaar (9B) in die zweite Signalübertragungsstrecke (18) geschaltet wird.

12. Verfahren nach einem der Ansprüche 9 bis 11, **dadurch gekennzeichnet, dass** die Anzeige- und/oder Signaleinheit (20) und/oder die Eingabeeinheit (27) einen berührungsempfindlichen Bildschirm (20A) mit einer graphischen Benutzeroberfläche aufweisen.

13. Verfahren nach einem der Ansprüche 9 bis 12, **dadurch gekennzeichnet, dass** in Abhängigkeit von dem Steuersignal ein Aktuator angesteuert wird, der eine Komponente der Baumaschine betätigt.

## Claims

1. Construction machine having a machine frame (2) supported by a chassis (1) and a device for controlling the construction machine, wherein the device for controlling the construction machine comprises:
an operating panel (8) which has at least one operating element (9) that can assume a plurality of switching states or positions,
a control and monitoring unit (15) for controlling a component of the construction machine as a function of a control signal signalling the switching state or the position of the at least one operating element (9),
a display and/or signal unit (20) which interacts with the control and monitoring unit (15),
**characterised in that**
a first signal transmission path (17) for signal transmission of a first control signal signalling the switching state or the position of the at least one operating element and a second signal transmission path (18) for signal transmission of a second control signal signalling the switching state or the position of the at least one operating element are provided between the at least one operating element (9) and the control and monitoring unit (15),
the control and monitoring unit (15) is configured such that the first control signal transmitted via the first signal transmission path (17) and the second control signal transmitted via the second signal transmission path (18) are checked for the existence of a plausibility criterion, wherein the plausibility criterion is that the signals transmitted via the first or second signal transmission path are the same, wherein the control and monitoring unit (15) causes the display and/or signal unit (20) to issue a request to activate an emergency operation if the control signals transmitted via the first and second signal transmission path do not meet the plausibility criterion, wherein in the emergency operation the control of the component without the plausibility check takes place only as a function of the first control signal transmitted via the first signal transmission path or the second control signal transmitted via the second signal transmission path, and
an input unit (27) cooperating with the control and monitoring unit (15) is provided, which is designed such that a correct functioning of a component of the construction machine can be confirmed, wherein a control signal signalling the correct functioning of the component is generated, which the control and monitoring unit receives, or an incorrect functioning of the component can be confirmed, wherein a control signal signalling the incorrect functioning of the component is generated, which the control and monitoring unit receives,
the control and monitoring unit (15) is configured such that in the event that the control signals transmitted via the first and second signal transmission paths (17, 18) do not meet the plausibility criterion,
the control is switched to an operating state in which the second signal transmission path (18) is deactivated, so that the control of the component takes place only as a function of the first control signal transmitted via the first signal transmission path (17), and the control and monitoring unit (15) causes the display and/or signal unit (20) to issue a request to actuate the operating element (9),
wherein
in the event that the control and monitoring unit (15) receives the control signal signalling the correct functioning of the component after actuation of the operating element (9), the control is switched to the emergency operation in which the control of the component takes place only as a function of the first control signal transmitted via the first signal transmission path (17), and
in the event that the control and monitoring unit (15) receives the control signal signalling the incorrect functioning of the component after actuation of the operating element (9), the control is switched to an operating state in which the first signal transmission path (17) is deactivated, so that the control of the component takes place only as a function of the second control signal transmitted via the second signal transmission path (18), and the control and monitoring unit (15) causes the display and/or signal unit (20) again to issue a request for actuation of the operating element (9), and
in the event that the control and monitoring unit (15) receives the control signal signalling the correct functioning after the renewed actuation of the operating element (9), the control is switched to the emergency mode in which the control of the component takes place only as a function of the second control signal transmitted via the second signal transmission path (18).

2. Construction machine according to claim 1, **characterised in that** the control and monitoring unit (15) is designed such that in the event that the control and monitoring unit (15) receives the control signal signalling the incorrect functioning of the component in the operating state in which the first signal transmission path (17) is deactivated or in the operating state in which the second signal transmission path (18) is deactivated, the control is not switched to the emergency operation.

3. Construction machine according to claim 2, **characterised in that** the control and monitoring unit (15) causes the display and/or signal unit (20) to display and/or signal a fault if the control is not switched to the emergency operation.

4. Construction machine according to any of claims 1 to 3, **characterised in that** the operating element (9) of the operating panel (8) is a switch or button which has a first contact pair (9A) and a second contact pair (9B), each of which assume an open or closed switching state, the first contact pair (9A) being switched into the first signal transmission path (17) and the second contact pair (9B) being switched into the second signal transmission path (18).

5. Construction machine according to any of claims 1 to 4, **characterised in that** the first and/or second signal transmission path (17, 18) are bus lines of a bus system, in particular a CAN bus.

6. Construction machine according to any of claims 1 to 5, **characterised in that** the display and/or signal unit (20) and/or the input unit (27) have a touch-sensitive screen (20A) having a graphical user interface.

7. Construction machine according to claim 6, **characterised in that** the construction machine has actuators for actuating a component of the construction machine.

8. Construction machine according to claim 7, **characterised in that** the actuator is a piston arrangement/cylinder arrangement.

9. Method for controlling a construction machine, **characterised in that**
a first control signal signalling the switching state or the position of an operating element (9) is transmitted via a first signal transmission path (17) and a second control signal signalling the switching state or the position of an operating element (9) is transmitted via a second signal transmission path (18), and
the first control signal transmitted via the first signal transmission path (17) and the second control signal transmitted via the second signal transmission path (18) are checked for the existence of a plausibility criterion, wherein the plausibility criterion is that the signals transmitted via the first or second signal transmission path are the same, wherein a display and/or signal unit (20) is prompted to issue a request to activate an emergency operation if the control signals transmitted via the first and second signal transmission path (17, 18) do not meet the plausibility criterion, wherein in the emergency operation the control of the component without the plausibility check takes place only as a function of the first control signal transmitted via the first signal transmission path or the second control signal transmitted via the second signal transmission path, and that
in the event that the plausibility criterion is not met,
the signal transmission via the second signal transmission path (18) is deactivated and the control of a component of the construction machine takes place only as a function of the first control signal signalling the switching state or the position of the operating element (9), and the display and/or signal unit (20) is caused by means of an input unit (27) to output a request for confirmation of a correct functioning or an incorrect functioning of the component of the construction machine,
wherein
in the event that a correct functioning of the component of the construction machine is confirmed with the input unit (27), the control is switched to the emergency operation in which the control of the component takes place only as a function of the first control signal transmitted via the first signal transmission path (17), and
in the event that an incorrect functioning of the component of the construction machine is confirmed with the input unit (27), the control is switched to an operating state in which the first signal transmission path (17) is deactivated and the control of the component is carried out only via the second control signal signalling the switching state or the position of the operating element, and the display and/or signal unit (20) is again caused to issue a request for confirmation of a correct functioning or an incorrect functioning,
and in the event that a correct functioning of the component is confirmed with the input unit (27), the control is switched to the emergency operation in which the control of the component takes place only as a function of the second control signal transmitted via the second signal transmission path (18).

10. Method according to claim 9, **characterised in that** the display and/or signal unit (20) is caused to display and/or signal a fault when an incorrect functioning of the component is confirmed with the input unit (27) in the operating state in which the first signal transmission path (17) is deactivated, or in the operating state in which the second signal transmission path (18) is deactivated.

11. Method according to any of claims 9 or 10, **characterised in that** a switch or button is provided as the operating element (9) of the operating panel (8), which switch or button has a first contact pair (9A) and a second contact pair (9B), each of which can be in an open or a closed switching state, the first contact pair (9A) being switched into the first signal transmission path (17) and the second contact pair (9B) being switched into the second signal transmission path (18).

12. Method according to any of claims 9 to 11, **characterised in that** the display and/or signal unit (20) and/or the input unit (27) have a touch-sensitive screen (20A) with a graphical user interface.

13. Method according to any of claims 9 to 12, **characterised in that** an actuator is actuated as a function of the control signal, which actuates a component of the construction machine.

## Revendications

1. Machine de construction avec un bâti de machine (2) qui est porté par un mécanisme de roulement (1), et un dispositif de commande de la machine de construction, dans laquelle le dispositif de commande de la machine de construction présente :
un pupitre de commande (8) qui présente au moins un élément de commande (9) qui peut occuper plusieurs états de commutation ou positions,
une unité de commande et de contrôle (15) pour la commande d'un composant de la machine de construction en fonction d'un signal de commande signalant l'état de commutation ou la position de l'au moins un élément de commande (9),
une unité d'affichage et/ou de signal (20) coagissant avec l'unité de commande et de contrôle (15),
**caractérisée en ce que**
entre l'au moins un élément de commande (9) et l'unité de commande et de contrôle (15), une première liaison de transmission de signal (17) est prévue pour la transmission de signal d'un premier signal de commande signalant l'état de commutation ou la position de l'au moins un élément de commande et une deuxième liaison de transmission de signal (18) est prévue pour la transmission de signal d'un deuxième signal de commande signalant l'état de commutation ou la position de l'au moins un élément de commande,
l'unité de commande et de contrôle (15) est configurée de telle manière que le premier signal de commande transmis par le biais de la première liaison de transmission de signal (17) et le deuxième signal de commande transmis par le biais de la deuxième liaison de transmission de signal (18) soient vérifiés quant à la présence d'un critère de vraisemblance, dans laquelle le critère de vraisemblance est que les signaux transmis par le biais de la première ou deuxième ligne de transmission de signaux (17, 18) sont identiques, dans laquelle l'unité de commande et de contrôle (15) incite l'unité d'affichage et/ou de signal (20) à émettre une exigence d'activation d'un fonctionnement d'urgence, lorsque les signaux de commande transmis par le biais des première et deuxième liaisons de transmission de signal ne remplissent pas le critère de vraisemblance, dans laquelle en fonctionnement d'urgence, la commande du composant est effectuée sans vérification de vraisemblance seulement en fonction du premier signal de commande transmis par le biais de la première liaison de transmission de signal ou du deuxième signal de commande transmis par le biais de la deuxième liaison de transmission de signal, et
une unité de saisie (27) coagissant avec l'unité de commande et de contrôle (15) est prévue, laquelle est réalisée de telle manière qu'un fonctionnement correct d'un composant de la machine de construction puisse être confirmé, dans laquelle un signal de contrôle signalant le fonctionnement correct du composant est généré, lequel reçoit l'unité de commande et de contrôle, ou un fonctionnement incorrect du composant puisse être confirmé, dans laquelle un signal de contrôle signalant le fonctionnement incorrect du composant est généré, lequel reçoit l'unité de commande et de contrôle,
l'unité de commande et de contrôle (15) est configurée de telle manière que dans le cas où les signaux de commande transmis par le biais des première et deuxième liaisons de transmission de signal (17, 18) ne remplissent pas le critère de vraisemblance,
la commande est commutée dans un état de fonctionnement, dans lequel la deuxième liaison de transmission de signal (18) est désactivée de sorte que la commande du composant soit effectuée seulement en fonction du premier signal de commande transmis par le biais de la première liaison de transmission de signal (17), et l'unité de commande et de contrôle (15) incite l'unité d'affichage et/ou de signal (20) à l'émission d'une exigence d'actionnement de l'élément de commande (9),
dans laquelle
dans le cas où l'unité de commande et de contrôle (15) reçoit après l'actionnement de l'élément de commande (9) le signal de contrôle signalant le fonctionnement correct du composant, la commande est commutée dans le fonctionnement d'urgence, dans lequel la commande du composant est effectuée seulement en fonction du premier signal de commande transmis par le biais de la première liaison de transmission de signal (17), et
dans le cas où l'unité de commande et de contrôle (15) reçoit après l'actionnement de l'élément de commande (9) le signal de contrôle signalant le fonctionnement incorrect du composant, la commande est commutée dans un état de fonctionnement, dans lequel la première liaison de transmission de signal (17) est désactivée de sorte que la commande du composant soit effectuée seulement en fonction du deuxième signal de commande transmis par le biais de la deuxième liaison de transmission de signal (18), et l'unité de commande et de contrôle (15) incite l'unité d'affichage et/ou de signal (20) de nouveau à l'émission d'une exigence d'actionnement de l'élément de commande (9), et
dans le cas où l'unité de commande et de contrôle (15) reçoit après le nouvel actionnement de l'élément de commande (9) le signal de contrôle signalant le fonctionnement correct, la commande est commutée dans le fonctionnement d'urgence, dans lequel la commande du composant est effectuée seulement en fonction du deuxième signal de commande transmis par le biais de la deuxième liaison de transmission de signal (18).

2. Machine de construction selon la revendication 1, **caractérisée en ce que** l'unité de commande et de contrôle (15) est réalisée de telle manière que dans le cas où l'unité de commande et de contrôle (15) reçoit dans l'état de fonctionnement, dans lequel la première liaison de transmission de signal (17) est désactivée, ou dans l'état de fonctionnement, dans lequel la deuxième liaison de transmission de signal (18) est désactivée, le signal de contrôle signalant le fonctionnement incorrect du composant, la commande n'est pas commutée dans le fonctionnement d'urgence.

3. Machine de construction selon la revendication 2, **caractérisée en ce que** l'unité de commande et de contrôle (15) incite l'unité d'affichage et/ou de signal (20) à l'affichage et/ou la signalisation d'une panne, lorsque la commande n'est pas commutée dans le fonctionnement d'urgence.

4. Machine de construction selon l'une quelconque des revendications 1 à 3, **caractérisée en ce que** l'élément de commande (9) du pupitre de commande (8) est un commutateur ou bouton-poussoir qui présente une première paire de contacts (9A) et une deuxième paire de contacts (9B) qui occupent respectivement un état de commutation ouvert ou fermé, dans laquelle la première paire de contacts (9A) est commutée dans la première liaison de transmission de signal (17) et la deuxième paire de contacts (9B) est commutée dans la deuxième liaison de transmission de signal (18).

5. Machine de construction selon l'une quelconque des revendications 1 à 4, **caractérisée en ce que** la première et/ou deuxième liaison de transmission de signal (17, 18) sont des lignes de bus d'un système de bus, en particulier un bus CAN.

6. Machine de construction selon l'une quelconque des revendications 1 à 5, **caractérisée en ce que** l'unité d'affichage et/ou de signal (20) et/ou l'unité de saisie (27) présentent un écran (20A) tactile avec une surface utilisateur graphique.

7. Machine de construction selon la revendication 6, **caractérisée en ce que** la machine de construction présente des actionneurs pour l'actionnement d'un composant de la machine de construction.

8. Machine de construction selon la revendication 7, **caractérisée en ce que** l'actionneur est un agencement de piston/cylindre.

9. Procédé de commande d'une machine de construction, **caractérisé en ce qu'**un premier signal de commande signalant l'état de commutation ou la position d'un élément de commande (9) est transmis par le biais d'une première liaison de transmission de signal (17) et un deuxième signal de commande signalant l'état de commutation ou la position d'un élément de commande (9) est transmis par le biais d'une deuxième liaison de transmission de signal (18), et
le premier signal de commande transmis par le biais de la première liaison de transmission de signal (17) et le deuxième signal de commande transmis par le biais de la deuxième liaison de transmission de signal (18) sont vérifiés quant à la présence d'un critère de vraisemblance, dans lequel le critère de vraisemblance est que les signaux transmis par le biais de la première ou deuxième ligne de transmission de signaux (17, 18) sont identiques, dans lequel une unité d'affichage et/ou de signal (20) est incitée à l'émission d'une exigence d'activation d'un fonctionnement d'urgence, lorsque les signaux de commande transmis par le biais des première et deuxième liaisons de transmission de signal (17, 18) ne remplissent pas le critère de vraisemblance, dans lequel dans le fonctionnement d'urgence la commande du composant est effectuée sans vérification de vraisemblance seulement en fonction du premier signal de commande transmis par le biais de la première liaison de transmission de signal ou du deuxième signal de commande transmis par le biais de la deuxième liaison de transmission de signal, et
que dans le cas où le critère de vraisemblance n'est pas rempli,
la transmission de signal est désactivée par le biais de la deuxième liaison de transmission de signal (18) et la commande d'un composant de la machine de construction est effectuée seulement en fonction du premier signal de commande signalant l'état de commutation ou la position de l'élément de commande (9), et l'unité d'affichage et/ou de signal (20) est incitée à l'émission d'une exigence de confirmation d'un fonctionnement correct ou d'un fonctionnement incorrect du composant de la machine de construction avec une unité de saisie (27),
dans lequel
dans le cas où avec l'unité de saisie (27) un fonctionnement correct du composant de la machine de construction est confirmé, la commande est commutée dans le fonctionnement d'urgence, dans lequel la commande du composant est effectuée seulement en fonction du premier signal de commande transmis par le biais de la première liaison de transmission de signal (17), et
dans le cas où avec l'unité de saisie (27) un fonctionnement incorrect du composant de la machine de construction est confirmé, la commande est commutée dans un état de fonctionnement, dans lequel la première liaison de transmission de signal (17) est désactivée et la commande du composant est effectuée seulement par le biais du deuxième signal de commande signalant l'état de commutation ou la position de l'élément de commande, et
l'unité d'affichage et/ou de signal (20) est incitée de nouveau à l'émission d'une exigence de confirmation d'un fonctionnement correct ou d'un fonctionnement incorrect,
et dans le cas où avec l'unité de saisie (27) un fonctionnement correct du composant est confirmé, la commande est commutée dans le fonctionnement d'urgence, dans lequel la commande du composant est effectuée seulement en fonction du deuxième signal de commande transmis par le biais de la deuxième liaison de transmission de signal (18).

10. Procédé selon la revendication 9, **caractérisé en ce que** l'unité d'affichage et/ou de signal (20) est incitée à l'affichage et/ou la signalisation d'une panne, lorsque dans l'état de fonctionnement, dans lequel la première liaison de transmission de signal (17) est désactivée, ou dans l'état de fonctionnement, dans lequel la deuxième liaison de transmission de signal (18) est désactivée, un fonctionnement incorrect du composant est confirmé avec l'unité de saisie (27).

11. Procédé selon l'une quelconque des revendications 9 ou 10, **caractérisé en ce que** comme élément de commande (9) du pupitre de commande (8), un commutateur ou bouton-poussoir est prévu, lequel présente une première paire de contacts (9A) et une deuxième paire de contacts (9B) qui occupent respectivement un état de commutation ouvert ou fermé, dans lequel la première paire de contacts (9A) est commutée dans la première liaison de transmission de signal (17) et la deuxième paire de contacts (9B) est commutée dans la deuxième liaison de transmission de signal (18).

12. Procédé selon l'une quelconque des revendications 9 à 11, **caractérisé en ce que** l'unité d'affichage et/ou de signal (20) et/ou l'unité de saisie (27) présentent un écran (20A) tactile avec une surface utilisateur graphique.

13. Procédé selon l'une quelconque des revendications 9 à 12, **caractérisé en ce qu'**en fonction du signal de commande, un actionneur est commandé, lequel actionne un composant de la machine de construction.
